# FASCICULE DE BREVET EUROPEEN

(11) **EP 4 664 916 B1**
(45) Date de publication et mention de la délivrance du brevet: **28.10.2026**
(21) Numéro de dépôt: 25181188.1
(22) Date de dépôt: 05.06.2025
(51) Int. Cl.: H04Q 11/00

(54) **PROCÉDÉ DE CONFIGURATION D'UN DISPOSITIF DE COUPLAGE PAR FIBRE OPTIQUE ET DISPOSITIF EXÉCUTANT LE PROCÉDÉ**
VERFAHREN ZUR KONFIGURATION EINER FASEROPTISCHEN KOPPLUNGSVORRICHTUNG UND VORRICHTUNG ZUR DURCHFÜHRUNG DES VERFAHRENS
METHOD FOR CONFIGURING AN OPTICAL FIBRE COUPLING DEVICE AND DEVICE FOR CARRYING OUT THE METHOD

(30) Priorité: 14.06.2024 FR 2406324
(43) Date de publication de la demande: 17.12.2025
(73) Titulaire: SAGEMCOM BROADBAND SAS, 92270 Bois-Colombes (FR)
(72) Inventeur: MSOLLI, Riadh, 92270 BOIS-COLOMBES (FR)
(74) Mandataire: Cabinet Le Guen Maillet

(56) Documents cités:
- WO-A1-2009/121308
- CN-B- 1 866 958
- US-A1- 2009 060 531
- US-A1- 2021 409 187

## Description

### DOMAINE TECHNIQUE

La présente invention concerne le domaine des réseaux de communication passifs par fibre optique. L'invention concerne plus particulièrement la configuration d'un dispositif de couplage par fibre optique opérant côté utilisateur (par exemple un abonné) d'un réseau de communication par fibre optique, en fonction du ou des protocoles implémentés par un équipement de terminaison localisé côté opérateur (par exemple un fournisseur de services) de ce même réseau de communication.

### ETAT DE LA TECHNIQUE ANTERIEURE

Les réseaux passifs de communication par fibre optique, dont notamment les réseaux dits FTTH (du sigle anglais désignant les termes « Fiber To The Home » et qui signifie « fibre optique jusqu'au domicile) sont largement utilisés pour implémenter des réseaux de communication entre des opérateurs de services et les locaux des utilisateurs. Différents protocoles existent pour organiser les communications entre les différents équipements utiles au fonctionnement de ces réseaux de communication, lesquels protocoles évoluent.
La norme XGS-PON (ITU-T G.9807.1) est considérée comme une évolution de la norme XG-PON (ITU-T G.987). Ces deux normes sont prévues pour fournir des services en opérant à un débit « descendant » de communication jusqu'à 10 Gbits/s. Un système XG-PON, à savoir un équipement de terminaison de type OLT (de l'anglais « Optical Line Termination ») relié à un équipement de type ONU (de l'anglais « Optical Network Unit »), est capable de fournir des débits jusqu'à 10 Gbits/s dans le sens descendant et jusqu'à 2,5 Gbits/s dans le sens montant. Un système XGS-PON à savoir un équipement de terminaison de type OLT (de l'anglais « Optical Line Termination ») relié à un équipement de type ONU (de l'anglais « Optical Network Unit »), est capable de fournir des débits jusqu'à 10 Gbits/s dans le sens descendant et jusqu'à 10 Gbits/s également dans le sens montant.
Certains réseaux sont homogènes, en ce sens que tous les équipements (équipement de terminaison OLT, côté opérateur, et équipement de couplage ONU, côté utilisateur) sont de type XG-PON ou encore tous les équipements (OLT et ONU) sont de type XGS-PON.
D'autres réseaux de communication PON sont dits « hybrides », c'est-à-dire que des équipements de terminaison OLT opèrent selon un protocole (ou standard) XGS-PON et d'autres équipements de terminaison OLT opèrent selon un protocole XG-PON. Il existe alors un besoin de pouvoir déployer des équipements de couplage ONU, côté utilisateur, qui soient compatibles avec les deux protocoles XG-PON et XGS-PON. En outre, un équipement de couplage de type ONU ne doit en aucun cas intégrer un réseau de communication PON (de l'anglais « Passive Optical Network ») en utilisant une vitesse de transmission maximale inférieure à sa vitesse de transmission maximale utilisable. Il arrive malheureusement que des équipements de couplage ONU soient initialement configurés (au moment de leur fabrication) en usine pour utiliser le protocole XG-PON, ou encore pour utiliser le protocole XGS-PON. Il peut arriver alors qu'un équipement de couplage ONU intègre automatiquement un réseau de communication en opérant selon le premier protocole qu'il aura détecté comme étant implémenté dans le réseau, lequel n'est pas forcément le protocole le plus performant implémenté dans le réseau.

Le document de l'état de l'art US 2021/409187 A1 décrit une solution reposant sur la transmission par un protocole indépendant de l'identifiant du dispositif de couplage ONU pour déterminer les protocoles XG-PON supportés par l'ONU.

La situation peut être améliorée.

### EXPOSÉ DE L'INVENTION

Un objet de la présente invention est de proposer un procédé de configuration d'un dispositif de couplage par fibre optique configuré pour opérer dans un réseau de communication par fibre optique, le réseau comprenant en outre un équipement de terminaison par fibre optique et un équipement de distribution par fibre optique, le dispositif de couplage étant apte à communiquer avec l'équipement de terminaison via l'équipement de distribution, le procédé étant exécuté dans (et par) le dispositif de couplage et le procédé comprenant une obtention d'au moins un champ d'informations de référence émis par l'équipement de terminaison, et comprenant une étape de configuration du dispositif de couplage selon une première configuration si au moins un champ d'informations de référence obtenu comprend un premier identifiant prédéfini et en ce qu'il comprend une étape de configuration du dispositif de couplage selon une deuxième configuration si au moins un champ d'informations de référence obtenu comprend un deuxième identifiant prédéfini. Ledit au moins un champ d'informations de référence obtenu est un champ de type Alloc-Id tel que défini selon le standard de communication ITU-T G.987, ou selon le standard de communication ITU-T G.9807.1, ou l'une de leurs évolutions.

Avantageusement, cela permet à un dispositif hybride de couplage par fibre optique, installé chez un utilisateur, de déterminer le ou les types de protocoles supportés par un équipement de terminaison réseau de l'opérateur auquel il est relié puis de se configurer ou de se reconfigurer en conséquence pour opérer selon le meilleur protocole possible.

Selon un mode de réalisation, l'étape de configuration du dispositif de couplage par fibre optique selon la première configuration configure le dispositif de couplage pour qu'il soit apte à opérer des communications selon un premier protocole implémenté par l'équipement de terminaison optique et l'étape de configuration du dispositif de couplage par fibre optique selon la deuxième configuration configure le dispositif de couplage par fibre optique pour qu'il soit apte à opérer des communications selon un deuxième protocole implémenté par l'équipement de terminaison optique, le second protocole étant différent du premier protocole.

Selon un mode de réalisation, les étapes d'obtention du au moins un champ d'informations de référence et de configuration du dispositif de couplage selon la première ou selon la deuxième configuration sont postérieures à une étape de synchronisation physique d'une couche physique du premier protocole ou d'une couche physique du second protocole, et antérieure à une phase d'acquisition d'un identifiant dudit dispositif de couplage.

Selon un mode de réalisation, le premier identifiant prédéfini est la valeur numérique 1022 et le deuxième identifiant prédéfini est la valeur numérique 1023.

Selon un mode de réalisation, lesdites étapes d'obtention d'au moins ledit un champ d'informations de référence et de configuration du dispositif de couplage selon ladite première ou ladite deuxième configuration du procédé sont postérieures à une étape de synchronisation physique avec des trames de communication de référence PHY telles que définies selon le standard de communication ITU-T G.987 ou selon le standard de communication ITU-T G.9807.1, et antérieures à une phase d'acquisition d'un numéro de série telle que définie selon le standard de communication ITU-T G.987 ou selon le standard de communication ITU-T G.9807.1.

Selon un mode de réalisation, le procédé comprend une obtention d'au moins un premier champ d'informations de référence émis par l'équipement de terminaison, le au moins un premier champ d'informations de référence comprenant ledit premier identifiant, et le procédé comprend en outre une obtention d'au moins un deuxième champ d'informations de référence comprenant le second identifiant ; le procédé étant tel que l'étape de configuration opère une configuration du dispositif de couplage selon la deuxième configuration.

Un autre objet de l'invention est un dispositif de couplage par fibre optique configuré pour opérer dans un réseau de communication par fibre optique, le réseau comprenant en outre un équipement de terminaison par fibre optique et un équipement de distribution par fibre optique, ledit dispositif de couplage étant configuré pour communiquer avec l'équipement de terminaison via l'équipement de distribution, le dispositif de couplage comprenant de la circuiterie électronique configurée pour obtenir au moins un champ d'informations de référence émis par l'équipement de terminaison, et comprenant en outre une circuiterie électronique configurée pour opérer une étape de configuration du dispositif de couplage selon une première configuration si au moins un champ d'informations de référence obtenu comprend un premier identifiant prédéfini et en ce qu'il comprend une étape de configuration du dispositif de couplage selon une deuxième configuration si au moins un champ d'informations de référence obtenu comprend un deuxième identifiant prédéfini. Ledit au moins un champ d'informations de référence obtenu est un champ de type Alloc-Id tel que défini selon le standard de communication ITU-T G.987, ou selon le standard de communication ITU-T G.9807.1, ou l'une de leurs évolutions.

Selon un mode de réalisation, le dispositif de couplage par fibre optique comprend de la circuiterie électronique configurée pour opérer l'étape de configuration du dispositif de couplage selon la première configuration pour configurer le dispositif de couplage pour qu'il soit apte à opérer des communications selon un premier protocole implémenté par l'équipement de terminaison par fibre optique, et comprend de la circuiterie électronique pour opérer l'étape de configuration du dispositif de couplage selon la deuxième configuration pour configurer le dispositif de couplage pour qu'il soit apte à opérer des communications selon un deuxième protocole implémenté par l'équipement de terminaison par fibre optique, le second protocole étant différent du premier protocole.

Selon un mode de réalisation, le dispositif de couplage par fibre optique comprend en outre de la circuiterie électronique configurée pour que les étapes d'obtention du au moins un champ d'informations de référence et de configuration du dispositif de couplage selon ladite première configuration ou selon la deuxième configuration soient postérieures à une étape de synchronisation physique d'une couche physique du premier protocole ou d'une couche physique du second protocole, et antérieure à une phase d'acquisition d'un identifiant du dispositif de couplage.

Selon un mode de réalisation, le dispositif de couplage par fibre optique comprend de la circuiterie électronique configurée pour opérer une détection d'un premier identifiant prédéfini de valeur numérique 1022 et/ou d'un deuxième identifiant prédéfini de valeur numérique 1023 dans le au moins un champ d'informations de référence.

Selon un mode de réalisation, le dispositif de couplage par fibre optique comprend en outre une circuiterie électronique configurée pour opérer les étapes d'obtention d'au moins un champ d'informations de référence et l'étape de configuration du dispositif de couplage selon la première configuration ou selon la deuxième configuration postérieurement à une étape de synchronisation avec des trames de communication de référence PHY telles que définies selon le standard de communication ITU-T G.987, ou selon le standard de communication ITU-T G.9807.1, ou encore l'une de leurs évolutions, et antérieurement à une phase d'acquisition d'un numéro de série telle que définie selon le standard de communication ITU-T G.987, le standard de communication ITU-T G.9807.1, ou selon l'une de leurs évolutions.

L'invention a également pour objet un réseau de communication comprenant un dispositif de couplage par fibre optique tel que décrit ci-avant.

Un autre objet de l'invention est un produit programme d'ordinateur comprenant des instructions de codes de programme pour exécuter des étapes du procédé tel que précédemment décrit lorsque le programme est exécuté par un processeur d'un dispositif de couplage par fibre optique, ainsi qu'un support de stockage d'informations comprenant un produit programme d'ordinateur tel que précité.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau de télécommunications de type PON comprenant un dispositif de couplage optique de type ONU selon un mode de réalisation ;
[Fig. 2] est un ordinogramme illustrant un procédé de configuration amélioré d'un dispositif de couplage optique, selon un premier mode de réalisation ;
[Fig. 3] est un ordinogramme illustrant un procédé de configuration amélioré d'un dispositif de couplage optique, selon un deuxième mode de réalisation ; et,
[Fig. 4] est un diagramme illustrant un exemple d'architecture interne d'un dispositif de couplage optique de type ONU, selon un mode de réalisation.

### EXPOSE DETAILLE DE MODES DE REALISATION

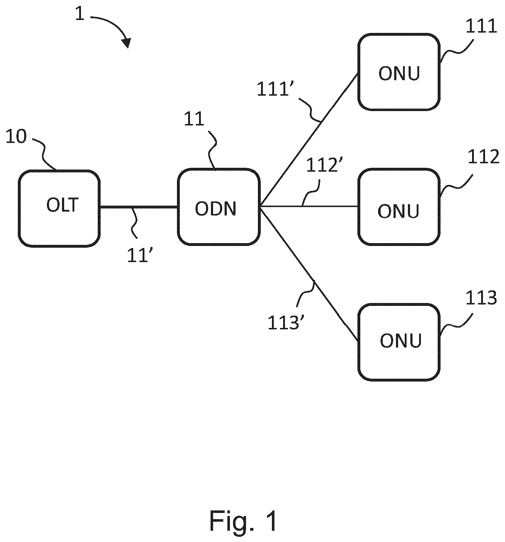

La **Fig. 1** illustre un réseau de communication 1 de type PON. Le réseau de communication 1 comprend un équipement de terminaison OLT 10 et un équipement de distribution ODN 11 relié à l'équipement de terminaison OLT 10 via un lien de communication 11'. L'équipement de distribution ODN 11 permet de transmettre des données depuis l'équipement OLT 10 vers des équipements d'utilisateurs que sont des dispositifs de couplage par fibre optique ONU 111, 112 et 113, et vice-versa. Le dispositif de couplage par fibre optique 111 est relié à l'équipement de distribution ODN 11 via un lien de communication 111'. Le dispositif de couplage par fibre optique 112 est relié à l'équipement de distribution ODN 11 via un lien de communication 112'. Le dispositif de couplage par fibre optique 113 est relié à l'équipement de distribution ODN 11 via un lien de communication 113'. Les liens de communication sont bidirectionnels et les équipements et dispositifs sont prévus et configurés chacun pour opérer des communications bidirectionnelles. Bien évidemment, le nombre d'équipements OLT, ODN et ONU présents dans le réseau de communication PON peut être beaucoup plus important, mais l'exemple décrit ne présente qu'un nombre limité d'équipements et de dispositifs à des fins de simplification.

Dans un réseau de type PON, tel que le réseau de communication 1, pour qu'un dispositif de couplage optique ONU soit opérationnel, il faut qu'il ait été préalablement activé par l'équipement de terminaison OLT auquel il est relié dans le réseau de communication. Par exemple, le processus d'activation décrit par la norme XG-PON (telle que décrite dans l'une de ses versions, par exemple dans le document Recommandation G.987 de l'ITU-T, de juin 2012) ou par la norme XGS-PON (telle que décrite dans l'une de ses versions, par exemple dans le document Recommandation G.9807.1 de l'ITU-T, de février 2023) comprend trois phases principales que sont une synchronisation, une acquisition, par l'équipement OLT d'un identifiant du dispositif concerné de couplage par fibre optique, tel que par exemple le numéro de série du dispositif concerné, puis une mesure de distance.

Astucieusement et selon au moins un mode de réalisation, dès qu'une synchronisation d'un équipement de couplage par fibre optique est établie avec des trames PHY descendantes, le dispositif ONU concerné lit le contenu d'un champ de données prédéterminé (encore appelé ici champ d'informations de référence) disponible dans un entête de chacune des trames de données émises par l'équipement OLT auquel il est relié. Cette lecture est opérée au niveau du pilote (ou « driver ») PON de la couche de communication MAC du dispositif de couplage ONU concerné.

Dans la description qui va suivre, on considère à titre d'exemple une intégration du dispositif de couplage optique ONU 111 dans le réseau de communication 1 de type PON. Selon un mode de réalisation, le champ d'informations de référence est d'un type Alloc-Id tel que défini selon le standard de communication ITU-T G.987, ou selon le standard de communication ITU-T G.9807.1, ou encore selon une évolution de l'un de ces standards, telles que par exemple la technologie NG2-PON, la technologie NG-EPON, ou la technologie G.hsp.x, ou la technologie 25GS-PON par exemple dans sa version 3.0 du MSA Group (www.25gspon-msa.org), ou la technologie 50G-PON par exemple définie par la recommandation ITU-T G.9804.3 (2021 Amd. 2 (03/2024). Ce champ (ou trame) d'informations de référence peut être présent en plusieurs exemplaires dans une trame de données émise par un équipement de terminaison de type OLT à destination d'un ou de plusieurs dispositifs de couplage de type ONU. Chacun de ces champs d'informations de référence comprenant un identifiant d'un ou plusieurs dispositifs de couplage par fibre de type ONU. En outre un premier identifiant Id1 est la valeur numérique 1023 et un deuxième identifiant Id2 est la valeur numérique 1022. Astucieusement, selon un mode de réalisation, le dispositif de couplage par fibre optique 111 exploite l'information Alloc-Id pour s'annoncer en tant que dispositif ONU de type XG-PON ou en tant que dispositif ONU de type XGS-PON auprès de l'OLT 10 du réseau de communication 1 auquel il est relié à un instant donné.

Pour ce faire, le dispositif de couplage par fibre optique 111 écoute les trames reçues par l'OLT 10, après synchronisation physique entre l'équipement de terminaison OLT 10 et le dispositif de couplage par fibre optique 111, et en particulier des champs d'informations BWmap, tels que définis selon la norme XG-PON et selon la norme XGS-PON (et tels que proposés par exemple dans la clause C.8.1.1.2 du document Recommandation ITU-T G.9807.1 de février 2023). Ces trames sont émises toutes les 125 microsecondes. Si parmi ces trames, le dispositif de couplage par fibre optique 111 ne détecte que des trames comprenant un Alloc-Id présentant un identifiant Id1 de valeur numérique 1023, alors le dispositif de couplage par fibre optique 111 détermine que l'équipement de terminaison OLT 10 lui présente un réseau de type XG-PON. Si, par contre, le dispositif de couplage par fibre optique 111 ne détecte que des trames comprenant un champ Alloc-Id présentant un identifiant Id2 de valeur numérique 1022, alors le dispositif de couplage par fibre optique 111 détermine que l'équipement de terminaison OLT 10 lui présente un réseau de type XGS-PON. Enfin, si le dispositif de couplage par fibre optique 111 détecte des trames comprenant un champ Alloc-Id présentant un identifiant Id1 de valeur numérique 1023 et aussi des trames comprenant un champ Alloc-Id présentant un identifiant Id2 de valeur numérique 1022, alors le dispositif de couplage par fibre optique 111 détermine que l'équipement de terminaison OLT 10 lui présente un réseau de type hybride compatible avec des dispositifs ONU implémentant un protocole XG-PON et avec des dispositifs ONU implémentant un protocole XGS-PON.

Avantageusement, l'ONU peut ainsi choisir le protocole le plus adapté, et se reconfigurer selon ce meilleur protocole, en l'occurrence selon le protocole XGS-PON qui est le plus performant en ce sens qu'il permet d'atteindre les débits les plus élevés. Il est ainsi possible qu'un ONU préconfiguré en usine avec le protocole le moins performant ne reste pas durablement configuré ainsi dans un réseau hybride, mais se reconfigure selon le meilleur protocole (ici XGS-PON parmi XG-PON et XGS-PON).

Avantageusement, une opération d'écoute peut être réitérée un nombre prédéterminé de fois. En effet, la fréquence de transmission des trames présentant les champs d'informations Alloc-Id est la même que celle de fenêtres de silence de 250 microsecondes recommandées dans un tel réseau de communication PON, qu'ouvre un équipement OLT pour permettre à des équipements ONU d'intégrer le réseau de communication. Il convient donc de s'affranchir d'incertitudes quant à la capacité à obtenir des informations de référence telles que les Alloc-Id recherchés. A titre d'exemple, pour une opération d'écoute d'une durée T1 de 5 secondes face à un équipement OLT qui ouvre une fenêtre de silence toutes les 5 secondes, il convient de répéter deux fois l'opération d'écoute, ce qui garantit une détection d'au moins une information de type Alloc-Id en provenance de l'équipement OLT 10, ce qui garantit la détection d'au moins un champ d'informations de référence de type Alloc-Id présentant l'un et/ou l'autre des identifiants Id1 et Id2. Au terme de la période d'écoute des trames comprenant des champs d'informations de référence successivement émises, le dispositif de couplage par fibre optique 111 qui est un dispositif hybride qui peut être compatible avec le protocole XG-PON et avec le protocole XGS-PON (tel que proposé par exemple dans la clause C.6.1.1 du document Recommendation ITU-T G.9807.1 de février 2023) choisira son mode de fonctionnement parmi ceux opérationnels dont il a pu détecter l'implémentation ou un usage, ou encore une configuration, par l'équipement de terminaison OLT, et engagera alors la suite de son activation via un processus normalisé en passant notamment à l'étape d'acquisition d'un identifiant du dispositif de couplage.

Il est à noter qu'un équipement de terminaison de type OLT propose aux dispositifs de couplage par fibre optique de type ONU n'ayant pas encore intégré le réseau de communication, grâce aux identifiants Alloc-Id 1022 et 1023, d'annoncer leur numéro de série au cours d'une fenêtre temporelle prédéfinie. Ainsi, pendant cette fenêtre temporelle, un équipement de terminaison de type OLT scrute les éventuels numéros de série qui lui parviendraient dans le but d'engager une phase de négociation visant à accepter conditionnellement un dispositif de type ONU s'annonçant à lui.

Plusieurs modes opératoires sont utilisables pour ce faire, selon la capacité logicielle et matérielle du dispositif de couplage par fibre optique de type ONU 111. Ainsi, le dispositif de couplage par fibre optique 111 peut simplement répondre à la prochaine allocation fournie par l'équipement OLT 10 pour l'acquisition d'un identifiant du dispositif de couplage correspondant au mode de fonctionnement le plus performant qu'il a pu détecter parmi XG-PON et XGS-PON. Mais le dispositif de couplage par fibre optique 111 peut également configurer sa couche MAC dite PON MAC, c'est-à-dire en procédant à une reconfiguration logicielle sans nécessiter de redémarrage comprenant une remise à zéro des circuiteries électroniques internes (matériel). Enfin, il se peut qu'un redémarrage matériel soit nécessaire pour appliquer la nouvelle configuration C1 ou C2 (détaillées plus loin dans la présente description).

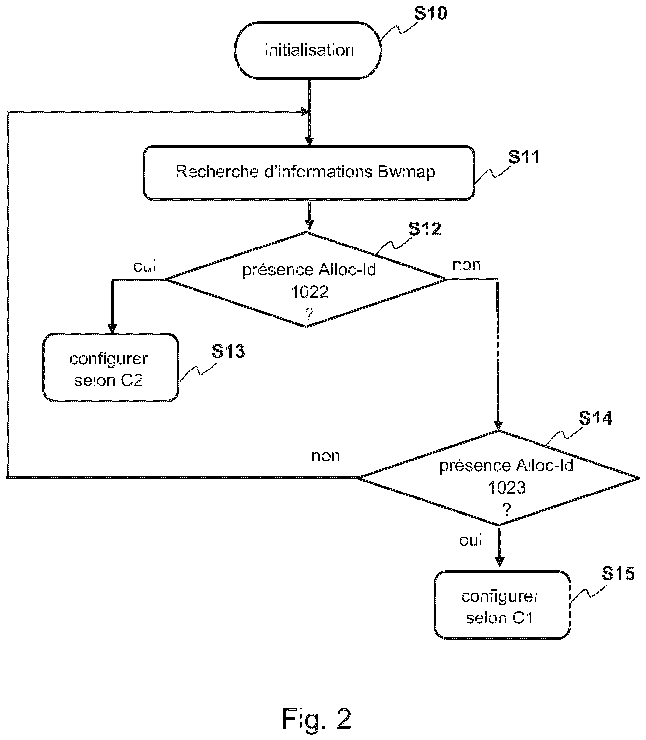

La **Fig. 2** est un ordinogramme illustrant un procédé de configuration du dispositif hybride de couplage par fibre optique 111 du réseau de communication 1 selon un mode de réalisation. Une étape **S10** est une étape d'initialisation au terme de laquelle tous les équipements du réseau de communication 1 de type PON sont normalement opérationnels, hormis le dispositif de couplage par fibre optique 111 qui est en cours d'activation dans le réseau de communication 1. Au terme de l'étape S10, le dispositif de couplage par fibre optique 111 est toutefois synchronisé avec des trames PHY émises par l'équipement de terminaison OLT 10, ce qui implique qu'un signal optique soit correctement reçu par le dispositif de couplage par fibre optique 111, en provenance de l'équipement de terminaison OLT 10, via l'équipement de distribution ODN 11. Une trame dite « PHY » est une trame physique se référant à la structure des données transmises au niveau de la couche physique utilisée pour la transmission des données entre l'équipement de terminaison optique de type OLT et un dispositif de couplage optique de type ONU. La couche physique assure la synchronisation, l'intégrité et la gestion des données qui transitent via la liaison optique entre un OLT et un ONU.

Lors d'une étape **S11,** le dispositif de couplage par fibre optique 111 opère une écoute des trames comprenant des champs d'informations émises par l'équipement de terminaison OLT 10 et scrute ces trames pendant une durée prédéterminée aux fins de détecter au moins un champ d'informations dit champ d'informations de référence, à savoir un champ de type « BWmap » permettant de déterminer quel protocole parmi le protocole XG-PON et le protocole XGS-PON est utilisé par l'équipement de type OLT. Le dispositif de couplage par fibre optique 111 scrute en particulier les champs d'informations Alloc-Id définis selon les protocoles susmentionnés et détermine lors d'une étape **S12,** après réception d'informations transmises dans le champ d'informations de référence, si l'information contenue dans le champ Alloc-Id présente la valeur numérique 1022. Si tel est le cas, à savoir si l'information Alloc-Id reçue présente la valeur numérique 1022 (étape S12, « oui »), alors le dispositif de couplage par fibre optique 111 se configure ou se reconfigure selon une configuration C2 lors d'une étape **S13.** *A contrario,* si Alloc-Id reçue ne présente pas la valeur numérique 1022 (étape S12, « non »), alors le dispositif de couplage par fibre optique 111 vérifie si l'information Alloc-Id présente la valeur 1023 lors d'une étape **S14.** Si tel est le cas, à savoir si l'information Alloc-Id reçue présente la valeur numérique 1023 (étape S14, « oui »), alors le dispositif de couplage par fibre optique 111 se configure ou se reconfigure selon une configuration C1 lors d'une étape **S15.** Dans le cas contraire, le procédé reboucle à l'étape S11 avec une nouvelle recherche d'un champ d'informations de référence BWmap selon le protocole XG-PON ou selon le protocole XGS-PON. La configuration C1 comprend ici tous les paramètres et valeurs de registres internes utiles au fonctionnement du dispositif de couplage par fibre optique 111 pour opérer selon le protocole XG-PON. La configuration C2 comprend ici tous les paramètres et valeurs de registres internes utiles au fonctionnement du dispositif de couplage par fibre optique 111 pour opérer selon le protocole XGS-PON.

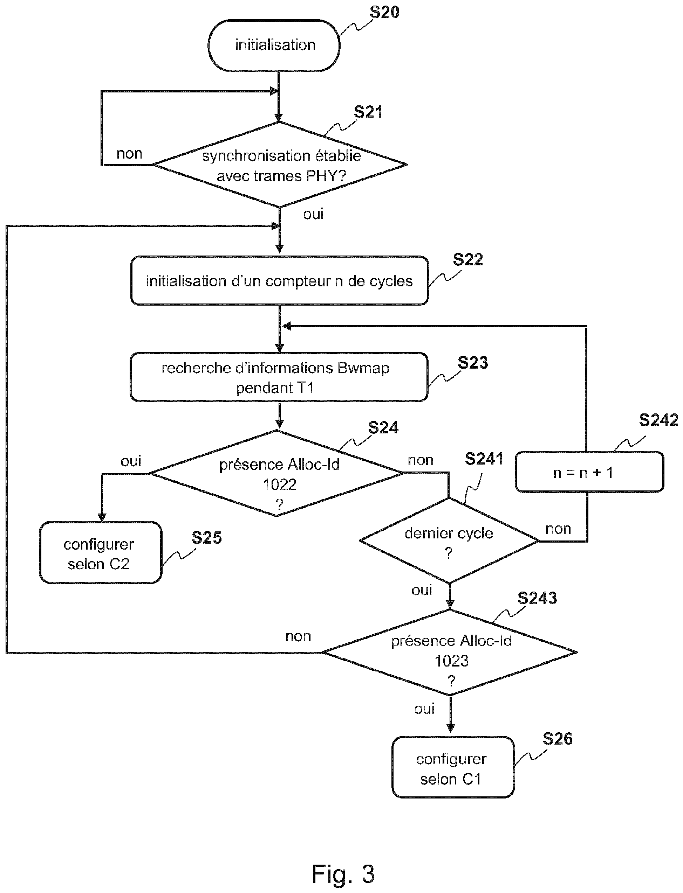

La **Fig. 3** illustre une variante de réalisation du mode de réalisation déjà décrit en relation avec la Fig. 2. Le mode de réalisation décrit ici comprend une itération de la boucle de recherche (ou de scrutation) de champs d'informations de référence BWmap un nombre de fois prédéterminé. Une étape **S20** correspond à une étape d'initialisation au terme de laquelle tous les équipements du réseau de communication 1 de type PON sont normalement opérationnels, hormis le dispositif de couplage par fibre optique 111 qui est en cours d'activation dans le réseau de communication 1. Puis, lors d'une étape **S21,** le dispositif de couplage par fibre optique 111 vérifie s'il est synchronisé avec des trames PHY émises par l'équipement de terminaison OLT 10, ce qui implique qu'un signal optique soit correctement reçu par le dispositif de couplage par fibre optique 111, en provenance de l'équipement de terminaison OLT 10, via l'équipement de distribution ODN 11. Dans le cas où le dispositif de couplage par fibre optique 111 est synchronisé avec des trames PHY émises par l'équipement de terminaison OLT 10, (étape S21, « oui »), le procédé continue en séquence en initialisant un compteur d'itérations de recherches d'informations lors d'une étape **S22.** Dans le cas où le dispositif de couplage par fibre optique 111 n'est pas ou pas encore parvenu à se synchroniser avec les trames PHY émises par l'équipement de terminaison OLT 10, (étape S21, « non »), le procédé reboucle à l'étape S21, en attente d'une synchronisation à venir. À la suite de l'initialisation du compteur d'itérations opérée lors de l'étape S22, une recherche d'informations BWmap est réalisée par le dispositif de couplage par fibre optique 111, lors d'une étape **S23,** pendant une durée T1 prédéterminée. Cette durée T1 est par exemple égale à 5 secondes. Selon des variantes, cette durée T1 peut être supérieure ou inférieure à 5 secondes. Lors de cette scrutation à l'étape S23, le dispositif de couplage par fibre optique 111 opère une recherche d'un champ d'informations de référence Alloc-Id. S'il détecte ensuite, lors d'une étape **S24,** un champ d'informations de référence Alloc-Id présentant un identifiant de valeur numérique égale à 1022 (étape S24, « oui »), alors le dispositif de couplage par fibre optique 111 opère, lors d'une étape **S25,** une configuration de ces circuits internes selon une configuration C2 comprenant tous les paramètres et valeurs de registres internes utiles au fonctionnement du dispositif de couplage par fibre optique 111 pour opérer selon le protocole XGS-PON puis le procédé continue en séquence avec une phase d'acquisition d'un identifiant du dispositif de couplage par fibre optique 111, comme par exemple l'acquisition d'un numéro de série ou d'un identifiant unique, selon le processus normalisé. *A contrario,* s'il n'est pas détecté un champ d'informations de référence présentant la valeur numérique 1022 à l'étape S24 (étape S24, « non »), alors le dispositif de couplage par fibre optique 111 vérifie lors d'une étape de comparaison **S241** si l'itération en cours de l'étape d'écoute (ou de scrutation) est la dernière parmi la succession d'étapes d'écoute à effectuer. Si l'itération de l'étape d'écoute en cours n'est pas la dernière (étape S241, « non »), alors le procédé incrémente un compteur n d'itérations effectuées lors d'une étape **S242** puis reboucle à l'étape S23 pour opérer une itération additionnelle d'écoute. Si l'itération d'étape d'écoute est la dernière à effectuer, compte-tenu du nombre maximal d'itérations prédéfini (étape S241, « oui »), il est vérifié lors d'une étape **243** si une information Alloc-Id présentant un identifiant de valeur numérique 1023 a été reçue par le dispositif de couplage par fibre optique 111. Si tel est le cas (étape S243, « oui »), alors le dispositif de couplage par fibre optique 111 opère, lors d'une étape **S26,** une configuration de ces circuits internes selon une configuration C1 comprenant tous les paramètres et valeurs de registres internes utiles au fonctionnement du dispositif de couplage par fibre optique 111 pour opérer selon le protocole XG-PON puis le procédé continue en séquence avec une phase d'acquisition d'un numéro de série, selon le processus normalisé. *A contrario,* s'il n'est pas détecté un champ d'informations de référence présentant la valeur numérique 1023 à l'étape S243 (étape S243, « non »), alors le procédé reboucle à l'étape S22 pour initier une nouvelle séquence d'itération de recherche de champs d'informations de référence, telle que décrite ci-avant. Les valeurs numériques 1023 et 1022 sont astucieusement et respectivement considérées et utilisées ici comme des identifiants Id1 et Id2 permettant d'informer un dispositif de couplage par fibre optique, hybride, tel que le dispositif de couplage par fibre optique 111 du ou des protocoles supportés par un équipement OLT auquel il est relié, parmi les protocoles XG-PON et XGS-PON.

Selon d'autres modes de réalisation, le champ d'informations de référence Alloc-Id peut présenter des identifiants présentant d'autres valeurs numériques particulières, différentes des valeurs numériques 1022 et 1023. Par exemple, l'une de ces valeurs peut être associée avec (et représentative de) un autre protocole ou une autre norme susceptible d'être utilisé dans le réseau de communication, outre les normes et protocoles XG-PON et XGS-PON. Ces valeurs particulières peuvent par exemple être comprises dans l'intervalle de valeurs [1024 ; 16383]. Ainsi, selon ces modes de réalisation, le dispositif de couplage par fibre optique 111, hybride dans le sens où il est compatible avec plusieurs normes ou protocoles de communication, est configuré pour déterminer efficacement quel est ou quels sont les normes ou protocoles utilisés par l'équipement de terminaison optique OLT 10.

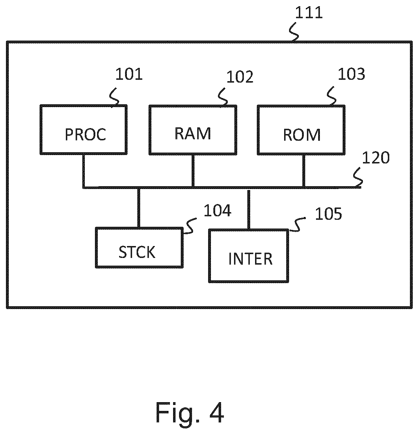

La **Fig. 4** illustre schématiquement un exemple d'architecture interne du dispositif de couplage par fibre optique 111. Considérons à titre illustratif que la Fig. 4 illustre un agencement interne du dispositif de couplage par fibre optique 111. Il est à noter que la Fig. 4 pourrait également représenter une architecture interne des dispositifs de couplage par fibre optique 112 et 113, ou encore du dispositif OLT 10. Selon l'exemple d'architecture matérielle représenté à la Fig. 4, le dispositif de couplage par fibre optique 111 comprend alors, reliés par un bus de communication 120 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur (ou un lecteur de support de stockage, tel qu'un lecteur de cartes SD (« Secure Digital » en anglais) 104 ; au moins une interface de communication 105 permettant au dispositif de couplage par fibre optique 111 de communiquer avec d'autres dispositifs auxquels il est relié, tels que des dispositifs de communication du réseau de communication 1 de type PON.

Le processeur 101 est capable d'exécuter des instructions chargées dans la RAM 102 à partir de la ROM 103, d'une mémoire externe (non représentée), d'un support de stockage (tel qu'une carte SD), ou d'un réseau de communication. Lorsque le dispositif de couplage par fibre optique 111 est mis sous tension, le processeur 101 est capable de lire de la RAM 102 des instructions et de les exécuter. Ces instructions forment un programme d'ordinateur causant la mise en œuvre, par le processeur 101, de tout ou partie d'un procédé décrit en relation avec la Fig. 2 ou des variantes décrites de ce procédé, tel que, par exemple, le procédé décrit en relation avec la Fig. 3.

Tout ou partie du procédé décrit en relation avec la Fig. 2 ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de couplage par fibre optique 111 comprend de la circuiterie électronique configurée pour mettre en œuvre les procédés décrits en relation avec lui-même. Bien évidemment, le dispositif de couplage par fibre optique 111 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

## Revendications

1. Procédé de configuration d'un dispositif de couplage par fibre optique (111) configuré pour opérer dans un réseau de communication par fibre optique (1), ledit réseau (1) comprenant en outre un équipement de terminaison par fibre optique (10) et un équipement de distribution par fibre optique (11), ledit dispositif de couplage (111) étant apte à communiquer avec ledit équipement de terminaison (10) via ledit équipement de distribution (11), ledit procédé étant exécuté dans ledit dispositif de couplage (111) et ledit procédé comprenant une obtention d'au moins un champ d'informations de référence émis par ledit équipement de terminaison (10), et ledit procédé comprenant une étape de configuration dudit dispositif de couplage (111) selon une première configuration (C1) si au moins un champ d'informations de référence obtenu comprend un premier identifiant (Id1) prédéfini, et en ce qu'il comprend une étape de configuration dudit dispositif de couplage (111) selon une deuxième configuration (C2) si au moins un champ d'informations de référence obtenu comprend un deuxième identifiant prédéfini (Id2), ledit procédé étant **caractérisé en ce que** ledit au moins un champ d'informations de référence obtenu est un champ de type Alloc-Id tel que défini selon le standard de communication ITU-T G.987, ou selon le standard de communication ITU-T G.9807.1, ou l'une de leurs évolutions.

2. Procédé de configuration selon la revendication 1, selon lequel l'étape de configuration dudit dispositif de couplage (111) selon la première configuration (C1) configure ledit dispositif de couplage (111) pour qu'il soit apte à opérer des communications selon un premier protocole implémenté par ledit équipement de terminaison par fibre optique (10), et selon lequel l'étape de configuration dudit dispositif de couplage (111) selon la deuxième configuration (C2) configure ledit dispositif de couplage (111) pour qu'il soit apte à opérer des communications selon un deuxième protocole implémenté par ledit équipement de terminaison par fibre optique (10), le second protocole étant différent du premier protocole.

3. Procédé de configuration selon la revendication 2, selon lequel lesdites étapes d'obtention dudit au moins un champ d'informations de référence et de configuration dudit dispositif de couplage selon ladite première ou ladite deuxième configuration sont postérieures à une étape de synchronisation physique d'une couche physique du premier protocole ou d'une couche physique du second protocole, et antérieure à une phase d'acquisition d'un identifiant dudit dispositif de couplage (111).

4. Procédé de configuration selon l'une des revendications 1 à 3, selon lequel ledit premier identifiant prédéfini est la valeur numérique 1023 et ledit deuxième identifiant prédéfini est la valeur numérique 1022.

5. Procédé de configuration selon l'une des revendications 1 à 4, selon lequel au moins un champ d'informations de référence obtenu est un champ de type Alloc Id tel que défini selon l'un des standards de communication lié à la technologie NG2-PON, ou l'un des standards de communication lié à la technologie NG-EPON, ou l'un des standards de communication lié à la technologie G.hsp.x, ou l'un des standards de communication lié à la technologie 25GS-PON, ou l'un des standards de communication lié à la technologie 50G-PON.

6. Procédé de configuration selon l'une des revendications 1 à 4, le procédé comprenant une obtention d'au moins un champ d'informations de référence émis par ledit équipement de terminaison (10), ledit au moins un premier champ d'informations de référence comprenant ledit premier identifiant (Id1), et comprenant en outre une obtention d'au moins un deuxième champ d'informations de référence comprenant ledit second identifiant (Id2), le procédé étant tel que ladite étape de configuration opère une configuration dudit dispositif de couplage selon ladite deuxième configuration (C2).

7. Dispositif de couplage par fibre optique (111) configuré pour opérer dans un réseau de communication par fibre optique (1), ledit réseau (1) comprenant en outre un équipement de terminaison par fibre optique (10) et un équipement de distribution par fibre optique (11), ledit dispositif de couplage (111) étant configuré pour communiquer avec ledit équipement de terminaison (10) via ledit équipement de distribution (11), ledit dispositif de couplage (111) comprenant de la circuiterie électronique configurée pour obtenir au moins un champ d'informations de référence émis par ledit équipement de terminaison par fibre optique (10), et comprenant en outre une circuiterie électronique configurée pour opérer une étape de configuration dudit dispositif de couplage par fibre optique (111) selon une première configuration (C1) si au moins un champ d'informations de référence obtenu comprend un premier identifiant (Id1) prédéfini, et en ce qu'il comprend une étape de configuration dudit dispositif de couplage (111) selon une deuxième configuration (C2) si au moins un champ d'informations de référence obtenu comprend un deuxième identifiant prédéfini (Id2), ledit dispositif de couplage (111) comprenant de la circuiterie électronique configurée pour obtenir ledit champ d'informations de référence sous forme d'un champ d'informations de type Alloc-Id tel que défini selon le standard de communication ITU-T G.987, ou selon le standard de communication ITU-T G.9807.1, ou l'une de leurs évolutions.

8. Dispositif de couplage par fibre optique (111) selon la revendication 7, comprenant de la circuiterie électronique configurée pour opérer l'étape de configuration dudit dispositif de couplage (111) selon la première configuration (C1) pour configurer ledit dispositif de couplage (111) pour qu'il soit apte à opérer des communications selon un premier protocole implémenté par ledit équipement de terminaison par fibre optique (10) et comprenant de la circuiterie électronique pour opérer l'étape de configuration dudit dispositif de couplage (111) selon la deuxième configuration (C2) pour configurer ledit dispositif de couplage (111) pour qu'il soit apte à opérer des communications selon un deuxième protocole implémenté par ledit équipement de terminaison par fibre optique (10), le second protocole étant différent du premier protocole.

9. Dispositif de couplage par fibre optique (111) selon la revendication 7 ou 8, comprenant en outre de la circuiterie électronique configurée pour que lesdites étapes d'obtention dudit au moins un champ d'informations de référence et de configuration dudit dispositif de couplage selon ladite première configuration (C1) ou selon ladite deuxième configuration (C2) soient postérieures à une étape de synchronisation physique d'une couche physique dudit premier protocole ou d'une couche physique dudit second protocole, et antérieure à une phase d'acquisition d'un identifiant dudit dispositif de couplage (111).

10. Dispositif de couplage par fibre optique (111) selon l'une des revendications 7 à 9, comprenant de la circuiterie électronique configurée pour que ledit premier identifiant prédéfini soit la valeur numérique 1023 et pour que ledit deuxième identifiant prédéfini soit la valeur numérique 1022.

11. Dispositif de couplage par fibre optique selon l'une des revendications 7 à 9, comprenant de la circuiterie électronique configurée pour que le au moins un champ d'informations de référence obtenu soit un champ de type Alloc Id tel que défini selon l'un des standards de communication lié à la technologie NG2-PON, ou l'un des standards de communication lié à la technologie NG-EPON, ou l'un des standards de communication lié à la technologie G.hsp.x, ou l'un des standards de communication lié à la technologie 25GS-PON, ou l'un des standards de communication lié à la technologie 50G-PON.

12. Dispositif de couplage par fibre optique selon l'un des revendication 7 à 11, comprenant une circuiterie électronique configurée pour opérer une obtention d'au moins un champ d'informations de référence émis par ledit équipement de terminaison (10), ledit au moins un premier champ d'informations de référence comprenant ledit premier identifiant (Id1), et pour opérer en outre une obtention d'au moins un deuxième champ d'informations de référence comprenant ledit second identifiant (Id2), la circuiterie électronique étant configurée en outre pour que l'étape de configuration opère une configuration dudit dispositif de couplage selon ladite deuxième configuration (C2).

13. Réseau de communication comprenant au moins un dispositif de couplage par fibre optique selon l'une des revendications 7 à 12.

14. Produit programme d'ordinateur **caractérisé en ce qu'**il comprend des instructions de codes de programme pour exécuter les étapes du procédé selon l'une quelconque des revendications 1 à 6, lorsque ledit programme est exécuté par un processeur d'un dispositif de couplage par fibre optique.

15. Support de stockage d'informations comprenant un produit programme d'ordinateur selon la revendication 14.

## Patentansprüche

1. Verfahren zur Konfiguration einer faseroptischen Kopplungsvorrichtung (111), die zum Betreiben in einem faseroptischen Kommunikationsnetzwerk (1) konfiguriert ist, wobei das Netzwerk (1) außerdem eine faseroptische Abschlussausrüstung (10) und eine faseroptische Verteilungsausrüstung (11) umfasst, wobei die Kopplungsvorrichtung (111) dazu geeignet ist, über die Verteilungsausrüstung (11) mit der Abschlussausrüstung (10) zu kommunizieren, wobei das Verfahren in der Kopplungsvorrichtung (111) ausgeführt wird und das Verfahren das Erhalten mindestens eines Referenzinformationsfeldes umfasst, das von der Abschlussausrüstung (10) emittiert wird, und das Verfahren einen Schritt zum Konfigurieren der Kopplungsvorrichtung (111) gemäß einer ersten Konfiguration (C1) umfasst, wenn mindestens ein erhaltenes Referenzinformationsfeld eine vordefinierte erste Kennung (Id1) umfasst, und dass es einen Schritt zum Konfigurieren der Kopplungsvorrichtung (111) gemäß einer zweiten Konfiguration (C2) umfasst, wenn mindestens ein erhaltenes Referenzinformationsfeld eine vordefinierte zweite Kennung (Id2) umfasst, wobei das Verfahren **dadurch gekennzeichnet ist, dass** das mindestens eine erhaltene Referenzinformationsfeld ein Feld vom Typ Alloc-Id ist, wie es gemäß der Kommunikationsnorm ITU-T G.987 oder gemäß der Kommunikationsnorm ITU-T G.9807.1 oder einer ihrer Weiterentwicklungen definiert ist.

2. Verfahren zur Konfiguration nach Anspruch 1, wobei der Konfigurationsschritt der Kopplungsvorrichtung (111) gemäß der ersten Konfiguration (C1) die Kopplungsvorrichtung (111) konfiguriert, damit sie dazu geeignet ist, Kommunikationen gemäß einem ersten Protokoll vorzunehmen, das von der faseroptischen Abschlussausrüstung (10) implementiert wird, und gemäß dem der Konfigurationsschritt der Kopplungsvorrichtung (111) gemäß der zweiten Konfiguration (C2) die Kopplungsvorrichtung (111) konfiguriert, damit sie dazu geeignet ist, Kommunikationen gemäß einem zweiten Protokoll vorzunehmen, das von der ersten faseroptischen Abschlussausrüstung (10) implementiert wird, wobei sich das zweite Protokoll von dem ersten Protokoll unterscheidet.

3. Verfahren zur Konfiguration nach Anspruch 2, gemäß dem die Schritte zum Erhalten des mindestens einen Referenzinformations- und Konfigurationsfeldes der Kopplungsvorrichtung gemäß der ersten oder der zweiten Konfiguration auf einen physikalischen Synchronisationsschritt einer physikalischen Schicht des ersten Protokolls oder einer physikalischen Schicht des zweiten Protokolls folgen und vor einer Erhebungsphase einer Kennung der Kopplungsvorrichtung (111) liegen.

4. Verfahren zur Konfiguration nach einem der Ansprüche 1 bis 3, gemäß dem die erste vordefinierte Kennung der Zahlenwert 1023 ist, und die zweite vordefinierte Kennung der Zahlenwert 1022 ist.

5. Verfahren zur Konfiguration nach einem der Ansprüche 1 bis 4, gemäß dem mindestens ein erhaltenes Referenzinformationsfeld ein Feld vom Typ Alloc Id ist, wie gemäß einer der Kommunikationsnormen im Zusammenhang mit der Technologie NG2-PON definiert, oder einer der Kommunikationsnormen im Zusammenhang mit der Technologie NG-EPON, oder einer der Kommunikationsnormen im Zusammenhang mit der Technologie G.hsp.x, oder einer der Kommunikationsnormen im Zusammenhang mit der Technologie 25GS-PON, oder einer der Kommunikationsnormen im Zusammenhang mit der Technologie 50G-PON.

6. Verfahren zur Konfiguration nach einem der Ansprüche 1 bis 4, wobei das Verfahren ein Erhalten mindestens eines Referenzinformationsfeldes umfasst, das von der Abschlussausrüstung (10) emittiert wird, wobei das mindestens eine Referenzinformationsfeld die erste Kennung (Id1) umfasst und außerdem ein Erhalten mindestens eines zweiten Referenzinformationsfeldes umfasst, das die zweite Kennung (Id2) umfasst, wobei das Verfahren derart ist, dass der Konfigurationsschritt eine Konfiguration der Kopplungsvorrichtung gemäß der zweiten Konfiguration (C2) vornimmt.

7. Faseroptische Kopplungsvorrichtung (111), die zum Betreiben in einem faseroptischen Kommunikationsnetzwerk (1) konfiguriert ist, wobei das Netzwerk (1) außerdem eine faseroptische Abschlussausrüstung (10) und eine faseroptische Verteilungsausrüstung (11) umfasst, wobei die Kopplungsvorrichtung (111) dazu konfiguriert ist, über die Verteilungsausrüstung (11) mit der Abschlussausrüstung (10) zu kommunizieren, wobei die Kopplungsvorrichtung (111) elektronische Schaltungsanordnungen umfasst, die dazu konfiguriert sind, mindestens ein Referenzinformationsfeld zu erhalten, das von der faseroptischen Abschlussausrüstung (10) emittiert wird, und außerdem elektronische Schaltungsanordnungen umfasst, die dazu konfiguriert sind, einen Konfigurationsschritt der faseroptischen Kopplungsvorrichtung (111) gemäß einer ersten Konfiguration (C1) vorzunehmen, wenn mindestens ein erhaltenes Referenzinformationsfeld eine erste vordefinierte Kennung (Id1) umfasst, und einen Schritt zum Konfigurieren der Kopplungsvorrichtung (111) gemäß einer zweiten Konfiguration (C2) umfasst, wenn mindestens ein erhaltenes Referenzinformationsfeld eine vordefinierte zweite Kennung (Id2) umfasst, wobei die Kopplungsvorrichtung (111) elektronische Schaltungsanordnungen umfasst, die dazu konfiguriert sind, das Referenzinformationsfeld in Form eines Informationsfeldes vom Typ Alloc-Id, wie es gemäß der Kommunikationsnorm ITU-T G.987 oder gemäß der Kommunikationsnorm ITU-T G.9807.1 oder einer ihrer Weiterentwicklungen definiert ist, zu erhalten.

8. Faseroptische Kopplungsvorrichtung (111) nach Anspruch 7, die elektronische Schaltungsanordnungen umfasst, die dazu konfiguriert sind, den Konfigurationsschritt der Kopplungsvorrichtung (111) gemäß der ersten Konfiguration (C1) vorzunehmen, um die Kopplungsvorrichtung (111) zu konfigurieren, damit sie dazu geeignet ist, Kommunikationen gemäß einem ersten Protokoll vorzunehmen, das von der faseroptischen Abschlussausrüstung (10) implementiert wird, und eine elektronische Schaltungsanordnung umfasst, um den Konfigurationsschritt der Kopplungsvorrichtung (111) gemäß der zweiten Konfiguration (C2) vorzunehmen, um die Kopplungsvorrichtung (111) zu konfigurieren, damit sie dazu geeignet ist, Kommunikationen gemäß einem zweiten Protokoll vorzunehmen, das von der faseroptischen Abschlussausrüstung (10) implementiert wird, wobei sich das zweite Protokoll von dem ersten Protokoll unterscheidet.

9. Faseroptische Kopplungsvorrichtung (111) nach Anspruch 7 oder 8, die außerdem elektronische Schaltungsanordnungen umfasst, die dazu konfiguriert sind, dass die Erhaltungsschritte des mindestens einen Referenzinformations- und Konfigurationfeldes der Kopplungsvorrichtung gemäß der ersten Konfiguration (C1) oder gemäß der zweiten Konfiguration (C2) auf einen physikalischen Synchronisationsschritt einer physikalischen Schicht des ersten Protokolls oder einer physikalischen Schicht des zweiten Protokolls folgen und vor einer Erhebungsphase einer Kennung der Kopplungsvorrichtung (111) liegen.

10. Faseroptische Kopplungsvorrichtung (111) nach einem der Ansprüche 7 bis 9, die elektronische Schaltungsanordnungen umfasst, die dazu konfiguriert sind, dass die erste vordefinierte Kennung der Zahlenwert 1023 ist, und dass die zweite vordefinierte Kennung der Zahlenwert 1022 ist.

11. Faseroptische Kopplungsvorrichtung nach einem der Ansprüche 7 bis 9, die elektronische Schaltungsanordnungen umfasst, die dazu konfiguriert sind, dass das mindestens eine erhaltene Referenzinformationsfeld ein Feld vom Typ Alloc Id ist, wie gemäß einer der Kommunikationsnormen im Zusammenhang mit der Technologie NG2-PON definiert, oder einer der Kommunikationsnormen im Zusammenhang mit der Technologie NG-EPON, oder einer der Kommunikationsnormen im Zusammenhang mit der Technologie G.hsp.x, oder einer der Kommunikationsnormen im Zusammenhang mit der Technologie 25GS-PON, oder einer der Kommunikationsnormen im Zusammenhang mit der Technologie 50G-PON.

12. Faseroptische Kopplungsvorrichtung nach einem der Ansprüche 7 bis 11, die elektronische Schaltungsanordnungen umfasst, die dazu konfiguriert sind, eine Erhaltung mindestens eines Referenzinformationsfeldes vorzunehmen, das von der Abschlussausrüstung (10) emittiert wird, wobei das mindestens eine erste Referenzinformationsfeld die erste Kennung (Id1) umfasst, und außerdem eine Erhaltung mindestens eines zweiten Referenzinformationsfeldes vorzunehmen, das die zweite Kennung (Id2) umfasst, wobei die elektronischen Schaltungsanordnungen außerdem dazu konfiguriert sind, dass der Konfigurationsschritt eine Konfiguration der Kopplungsvorrichtung gemäß der zweiten Konfiguration (C2) vornimmt.

13. Kommunikationsnetzwerk, das mindestens eine faseroptische Kopplungsvorrichtung nach einem der Ansprüche 7 bis 12 umfasst.

14. Computerprogrammprodukt, das **dadurch gekennzeichnet ist, dass** es Programmcodeanweisungen zum Ausführen der Schritte des Verfahrens nach einem der Ansprüche 1 bis 6 umfasst, wenn das Programm von einem Prozessor einer faseroptischen Kopplungsvorrichtung ausgeführt wird.

15. Informationsspeichermedium, das ein Computerprogrammprodukt nach Anspruch 14 umfasst.

## Claims

1. Method for configuring an optical-fibre coupling device (111) configured to operate in an optical-fibre communication network (1), said network (1) furthermore comprising optical-fibre termination equipment (10) and optical-fibre distribution equipment (11), said coupling device (111) being able to communicate with said termination equipment (10) via said distribution equipment (11), said method being implemented in said coupling device (111), and said method comprising obtaining at least one reference information field sent by said termination equipment (10), and said method comprising a step of configuring said coupling device (111) according to a first configuration (C1) if at least one reference information field obtained comprises a first predefined identifier (Id1), and in that it comprises a step of configuring said coupling device according to a second configuration (C2) if at least one reference information field obtained comprises a second predefined identifier (Id2), said method being **characterised in that** said at least one reference information field obtained is a field of the Alloc-Id type as defined according to the ITU-T communication standard G.987, or according to the ITU-T communication standard G.9807.1, or one of the evolutions thereof.

2. Configuration method according to claim 1, according to which the step of configuring said coupling device (111) according to the first configuration (C1) configures said coupling device (111) so that it is able to make communications according to a first protocol implemented by said optical-fibre termination equipment (10), and according to which the step of configuring said coupling device (111) according to the second configuration (C2) configures said coupling device (111) so that it is able to make communications according to a second protocol implemented by said optical-fibre termination equipment (10), the second protocol being different from the first protocol.

3. Configuration method according to claim 2, according to which said steps of obtaining said at least one reference information field and of configuring said coupling device according to said first or said second configuration are subsequent to a step of physical synchronisation of a physical layer of the first protocol or of a physical layer of the second protocol, and prior to a phase of acquiring an identifier of said coupling device (111).

4. Configuration method according to one of claims 1 to 3, according to which said first predefined identifier is the numerical value 1023 and said second predefined identifier is the numerical value 1022.

5. Configuration method according to one of claims 1 to 4, according to which said at least one reference information field obtained is a field of the Alloc-Id type as defined according to one of the communication standards related to NG2-PON technology, or one of the communication standards related to NG-EPON technology, or one of the communication standards related to G.hsp.x technology, or one of the communication standards related to 25GS-PON technology, or one of the communication standard related to 50G-PON technology.

6. Configuration method according to one of claims 1 to 4, the method comprising obtaining at least one reference information field sent by said termination equipment (10), said at least one first reference information field comprising said first identifier (Id1), and furthermore comprising obtaining at least one second reference information field comprising said second identifier (Id2) the method being such that said configuration step implements a configuration of said coupling device according to said second configuration (C2).

7. Optical-fibre coupling device (111) configured to operate in an optical-fibre communication network (1), said network (1) furthermore comprising optical-fibre termination equipment (10) and optical-fibre distribution equipment (11), said coupling device (111) being configured to communicate with said termination equipment (10) via said distribution equipment (11), said coupling device (111) comprising electronic circuitry configured to obtain at least one reference information field sent by said optical-fibre termination equipment (10), and furthermore comprising electronic circuitry configured to perform a step of configuring said optical-fibre coupling device (111) according to a first configuration (C1) if at least one reference information field obtained comprises a first predefined identifier (Id1), and in that it comprises a step of configuring said coupling device (111) according to a second configuration (C2) if at least one reference information field obtained comprises a second predefined identifier (Id2), said coupling device (111) comprising electronic circuitry configured to obtain said reference information field in the form of an information field of the Alloc-Id type as defined according to the ITU-T communication standard G.987, or according to the ITU-T communication standard G.9807.1, or one of the evolutions thereof.

8. Optical-fibre coupling device (111) according to claim 7, comprising electronic circuitry configured to perform the step of configuring said coupling device (111) according to the first configuration (C1) to configure said coupling device (111) so that it is able to make communications according to a first protocol implemented by said optical-fibre termination equipment (10) and comprising electronic circuitry for performing the step of configuring said coupling device (111) according to the second configuration (C2) to configure said coupling device (111) so that it is able to make communications according to a second protocol implemented by said optical-fibre termination equipment (10), the second protocol being different from the first protocol.

9. Optical-fibre coupling device (111) according to claim 7 or 8, furthermore comprising electronic circuitry configured so that said steps of obtaining said at least one reference information field and of configuring said coupling device according to said first configuration (C1) or according to said second configuration (C2) are subsequent to a step of physical synchronisation of a physical layer of said first protocol or of a physical layer of said second protocol, and prior to a phase of acquiring an identifier of said coupling device (111).

10. Optical-fibre coupling device (111) according to one of claims 7 to 9, comprising electronic circuitry configured so that said first predefined identifier is the numerical value 1023 and so that said second predefined identifier is the numerical value 1022.

11. Optical-fibre coupling device according to one of claims 7 to 9, comprising electronic circuitry configured so that the at least one reference information field obtained is a field of the Alloc-Id type as defined according to one of the communication standards related to NG2-PON technology, or one of the communication standards related to NG-EPON technology, or one of the communication standards related to G.hsp.x technology, or one of the communication standards related to 25GS-PON technology, or one of the communication standard related to 50G-PON technology.

12. Optical-fibre coupling device according to one of claims 7 to 11, comprising electronic circuitry configured to implement obtaining at least one reference information field sent by said termination equipment (10), said at least one first reference information field comprising said first identifier (Id1), and furthermore to implement obtaining at least one second reference information field comprising said second identifier (Id2), the electronic circuitry furthermore being configured so that the configuration step implements a configuration of said coupling device according to said second configuration (C2).

13. Communication network comprising at least one optical-fibre coupling device according to one of claims 7 to 12.

14. Computer program product **characterised in that** it comprises program code instructions for performing the steps of the method according to any one of claims 1 to 6, when said program is executed by a processor of an optical-fibre coupling device.

15. Information storage medium comprising a computer program product according to claim 14.
